# EUROPÄISCHE PATENTSCHRIFT

(11) **EP 3 648 946 B1**
(45) Veröffentlichungstag und Bekanntmachung des Hinweises auf die Patenterteilung: **22.02.2023**
(21) Anmeldenummer: 18739471.3
(22) Anmeldetag: 26.06.2018
(51) Int. Cl.: B29C 48/285, B33Y 40/00

(54) **VORRICHTUNG UND VERFAHREN ZUR EXTRUSION VON THERMO-MECHANISCH VERFORMBAREN MATERIALIEN IN SCHÜTTGUTFORM UND SCHNECKENEXTRUDER KOMPAKTER BAUFORM**
COMPACT EXTRUDER AND EXTRUSION OF THERMOMECHANICALLY DEFORMABLE PELLETS
EXTRUDEUSE COMPACTEE ET METHODE POUR EXTRUDER DE GRANULES DEFORMABLE THERMOMECHANICQUEMENT

(30) Priorität: 04.07.2017 DE 102017114841
(43) Veröffentlichungstag der Anmeldung: 13.05.2020
(73) Patentinhaber: AIM3D GmbH, 18069 Rostock (DE)
(72) Erfinder: RÜCKBORN, Tom, 18057 Rostock (DE); ZIELKE, René, 18069 Rostock (DE); LIEBERWIRTH, Clemens, 18059 Rostock (DE); MORRISON, Vincent, 18292 Krakow am See (DE); SEITZ, Hermann, 18055 Rostock (DE)
(74) Vertreter: Maikowski & Ninnemann Patentanwälte Partnerschaft mbB
(86) Internationale Anmeldenummer: PCT/EP2018/067130
(87) Internationale Veröffentlichungsnummer: WO 2019/007756

(56) Entgegenhaltungen:
- EP-A2- 0 806 280
- WO-A1-2016/098053
- CN-U- 206 251 682
- DE-A1- 2 449 489
- DE-B- 1 271 973
- US-A- 3 645 659
- US-A- 4 863 366
- US-A1- 2015 130 101
- US-A1- 2016 347 000
- US-A1- 2017 057 151
- US-A1- 2017 291 364
- Richard Horne: "RichRap Universal Pellett Extruder Project - 3D Printing", YouTube , 20. Dezember 2014 (2014-12-20), XP054978594, Gefunden im Internet: URL:https://www.youtube.com/watch?v=ZTju-E H22uY [gefunden am 2018-07-30]

## Beschreibung

Die Erfindung betrifft ein Verfahren zur Extrusion von thermo-mechanisch verformbarem granulatförmigen Material für einen additiven Fertigungsprozess. Mittels der Erfindung erfolgt eine Reduzierung der Baugröße von vertikalen Schneckenextrudern für die additive Fertigung mit Metall- Keramik- und Kunststoffspritzgussgranulaten.

Die Extrusion von Materialien, die unter thermischem und mechanischem Einfluss plastifizierbar sind, wird heutzutage größtenteils im Bereich des Spritzguss und Druckguss eingesetzt. Die Verfahren eigenen sich dabei hauptsächlich für Serienanwendungen, da zu jedem zu fertigenden Bauteil eine Spritzgussform erforderlich ist. Seit der Etablierung von diversen additiven Fertigungsverfahren ist es ebenfalls möglich komplexe dreidimensionale Bauteile aus thermoplastischen oder metallischen Materialien zu erzeugen. Die Notwendigkeit, eine Form zu erstellen, entfällt dabei. Bei einigen dieser additiven Fertigungsverfahren werden Extrusionsprozesse eingesetzt, um schichtweise dreidimensionale Bauteile aufzubauen. So wird zum Beispiel für das CEM-Verfahren ein kompakter Schneckenextruder benötigt.

Im Bereich des Spritzgusses werden in der Regel sogenannte Drei-Zonen-Schneckenextruder eingesetzt, die die folgenden Aufgaben haben:
Einzug des Materials,
Förderung des Materials zur Düse,
Komprimierung und Entlüftung des Materials,
Homogenisierung des Materials,
Druckaufbau zur Füllung der Matrize.

Um einen Einzug und eine Förderbarkeit des Materials zu gewährleisten, wird in der Regel ein Verhältnis zwischen Außenradius des Schneckenblattes zum Radius der Schneckenwelle gewählt, das einem Vielfachen der Korngröße des zu verarbeitenden Granulates entspricht. Die Komprimierung und Homogenisierung des Materials hat einen Druckaufbau zur Folge, der für die gleichmäßige Extrusion eines luftfreien Materials erforderlich ist. Dabei ist zu beachten, dass zu hohe Kompressionsraten zu hohen Seherbelastungen für das Material führen. Gerade bei Kompositmaterialien kann dies zu unerwünschten Entmischungsvorgängen führen. Um dies zu verhindern aber gleichzeitig eine ausreichende Kompression und Homogenisierung zu erreichen, wird der Anstieg des Schneckendurchmessers nicht zu groß gewählt. Die konstruktive Lösung besteht aus einer längeren Kompressionszone. Übliche Verhältnisse zwischen Schneckendurchmesser und Schneckenlänge liegen daher bei ca. 16 bis 20. Es sind Lösungen bekannt in denen kompaktere Schneckenextruder beschrieben sind. US 2016 347 000 A1 und XP054 978 594 offenbaren Extruder für die additive Fertigung mit Zerkleinerungswerkzeugen.

In EP 1 063 075 B1 ist ein kompakter Schneckenextruder beschrieben, der durch den Einsatz mehrerer parallel angeordneter Schnecken die Gesamtlänge des Extruders reduziert. Dabei laufen jeweils zwei Schnecken in einer gemeinsamen Kammer in eine Richtung. Am Ende der Kammer wird das Material durch eine Passage in eine weitere Kammer übergeben, in der zwei parallellaufende Schnecken das Material in die entgegengesetzte Richtung fördern. Dabei wird die Schneckensteigung so variiert, dass eine stufenweise Verdichtung des Materials erfolgt. Durch Aneinanderreihung mehrerer Kammern mit parallellaufenden Schnecken kann der Grad der Verdichtung eingestellt werden. Die beschriebene Lösung reduziert dabei die Länge des Extrudergehäuses auf Kosten einer größeren Breite durch die parallel angeordneten Kammern. Der Bauraum und das Gewicht des Extruders nehmen dabei nicht ab und auch die wirksame Schneckenlänge wird nicht reduziert, da das Material alle Kammern durchlaufen muss.

In CN 105 936 119 A wird ebenfalls ein Schneckenextruder in kompakter Bauweise beschrieben. Bei dieser Lösung handelt es sich um einen koaxialen Aufbauzweier Schnecken in einem Gehäuse. Das Material wird dabei zunächst radial auf der äußeren als Hohlwelle ausgeführten Schnecke zugeführt. Am Ende der Förderrichtung erfolgt eine Umlenkung des Materials in einen Spalt, der durch die Anordnung einer weiteren gegenläufig fördernden Schnecke in der Hohlwelle entsteht. Durch die zusätzliche Anordnung einer inversen Schnecken-Geometrie auf der Innenwand der Hohlwellen-Schnecke entsteht ein noch höherer Kompressionseffekt Diese Lösung reduziert ebenfalls die Länge des Extrudergehäuses, die wirksame Schneckenlänge bleibt jedoch weitestgehend gleich groß, da das Material auf eine weitere Schnecke überführt wird, die platzsparend angeordnet ist. Hierdurch erhöht sich der Durchmesser des Extrudergehäuses sowie dessen Masse.

Im Bereich der additiven Fertigung mittels thermo-mechanisch verformbaren Materialien werden zu einem Großteil Kunststoffdrähte verwendet, die in eine beheizte Düse gepresst werden, um den Extrusionsprozess darzustellen. Es sind auch Lösungen bekannt, die einen Schneckenextruder für den Extrusionsprozess verwenden.

In D E 20 2005 018 685 U1 wird ein Handschweißextruder vorgestellt, der über eine dem Antrieb der Schnecke zugewandte Schneidkante am Schneckenblatt ein thermoplastisches Material beim Einzug in den Extruder zerschneidet. Das Material wird über ein Einzugsgewinde dem Schneckenextruder zugeführt. Das Einzugsgewinde reicht bis in den Kanal, über den das thermoplastische Material der Schnecke zugeführt wird. Weiterhin befindet sich ebenfalls im Einzugskanal gegenüberliegend des Einzugsgewindes eine Vorrichtung um eine einstellbare Gegenspannung zum Einzugsgewinde herzustellen. Die Gestaltung des Einzugskanals samt Gegenspanner und Einzugsgewinde macht deutlich, dass es sich um eine Lösung für die Verarbeitung von Filament bzw. Kunststoffschweißdraht handelt, wie er üblicherweise bei Handschweißextrudern eingesetzt wird. Die Vorrichtung hat den Zweck, das auf einer Rolle aufgewickelte Material in den Extruder einzuziehen wo es von der Schneidkante der Schneckenwindung zerteilt wird. Die Lösung eignet sich nicht für eine Verarbeitung von granulatförmigem Spritzgussmaterial da sich dies nicht durch Gegenspanner und Einzugsgewinde einziehen lässt. In Folge dessen kann die Schneidkante der Schnecke auch keine Kraft auf das Material ausüben, da dieses nirgendwo fixiert ist.

In DE 10 2014 018 081 A1 ist eine Anlage zur additiven Fertigung metallischer Bauteile beschrieben. Hierbei kommt ebenfalls ein Schneckenextruder zum Einsatz, der als Granulat vorliegendes Material verarbeitet. In einem verfahrbaren Druckkopf wird mittels eines senkrecht angeordneten Schneckenextruders thermoplastisch verformbares Material schichtweise extrudiert, um dreidimensionale Bauteile zu erzeugen. Die beschriebene Lösung bezieht sich hauptsächlich auf die Anordnung des Druckkopfes im Gesamtsystem, als auch auf die Art und Weise der Zuführung von Material zum Druckkopf. Weiterhin werden andere Extruderausführungen beschrieben, die nicht auf der Verarbeitung von Granulat basieren. Die vorliegende Lösung beschreibt nicht die Art und Weise der Ausgestaltung des Extruders hinsichtlich einer möglichst kleinen Baugröße bei gleichbleibend hoher Kompressionsrate. Es wird lediglich darauf verwiesen, dass eine konisch geformte Kompressionsschnecke verwendet wird.

In US 2015/ 0 321 419 A1 wird ebenfalls eine Anlage zur additiven Verarbeitung von granulatförmigem Material beschrieben. Dabei kommt ebenfalls ein Schneckenextruder zum Einsatz, der sowohl senkrecht als auch waagerecht, dabei aber immer feststehend ausgeführt sein kann. Das Material wird über einen Trichter und eine Rutsche direkt über eine Öffnung in der Rohrwand auf eine Extruderschnecke geführt. Die Schnecke ist dabei als Drei-Zonen-Schnecke ausgeführt und weist ein Längen-Durchmesser-Verhältnis von 15 bis 24 auf. Damit handelt es sich zwar um eine im Durchmesser kleiner skalierte Schecke, die jedoch dasselbe Längen-Durchmesser-Verhältnis aufweist wie übliche Drei-Zonen-Extruderschnecken aus dem Bereich des Spritzgusses. Eine Reduzierung des Längen-Durchmesser-Verhältnisses wird nicht beschrieben. Durch die Ausführung der Materialaufnahme als Rohrschnitt handelt es sich lediglich um einen vertikal gelegten klassischen Drei-Zonen-Schneckenextruder Aufbau.

Der Einsatz von Schneckenextrudern für die additive Fertigung ist vor allem durch deren Baugröße, die vor allem durch die Länge der Schnecke definiert wird und ihr Gewicht limitiert, da sie entweder verfahrbar ausgeführt sein müssen oder das gesamte Baufeld bewegt wird. Letztere Lösung macht es allerdings erforderlich den gesamten Drucker deutlich zu überdimensionieren.

Mit den aus dem Stand der Technik bekannten Lösungen ist es bisher nicht möglich, das Längen-Durchmesserverhältnisvon Extruderschnecken zu reduzieren. Um hohe Bauraten und damit hohe Geschwindigkeit in einem additiven Fertigungsprozess zu erreichen, müssen die verfahrbaren Elemente der Anlage möglichst schnell bewegt werden. Bei der in US 2015/0 321 419 A1 beschriebenen Lösung wird aufgrundder Tatsache, dass der Extruder nicht weiter verkleinert werden kann, die Baufläche auf der das Teil gedruckt wird in x, y und z verfahren. Bei größeren Bauteilen oder bei der Verwendung von Material mit einer höheren Dichte sind aufgrund der großen bewegten Masse keine hohen Bauraten mehr möglich. Die weiterhin bekannten Lösungen reduzieren lediglich die Länge des Extruders, jedoch nicht dessen Baugröße bzw. die Masse; auch das Längen/Durchmesserverhältnisbleibt jeweils mehr oder weniger unverändert.

In AT 407 848 B wird eine Vorrichtung zur Aufbereitung von thermoplastischen Kunststoffabfällen beschrieben. Ein kegelstumpfförmiger Behälter dient der Zuführung von Kunststoffgut Über eine Austragsöffnung wird aufbereitetes Kunststoffgut an einen nachgeschalteten Extruder weitergegeben. Im Behälter ist zumindest eine erste Schnecke mit einem Kern und darauf ausgebildeter Schneckenwendel angeordnet. Die Innenwand des Behälters ist mit einer Schneckenwendel versehen, wodurch die Kunststoffabfälle in den Extruder und von dort mittels der Extruderschnecke weiter befördert werden. Die Lösung ist auf eine Vorrichtung zur Aufbereitung von Kunststoff-Beschickungsgut gerichtet, die eine Lösung des Problems der Brückenbildung des Kunststoffguts im Aufnahmebehälter bietet und die ausreichende Stopfwirkung und zufriedenstellende Materialzufuhr zu einem nachgeschalteten Extruder bietet. Es können unterschiedlichste Packungsdichten und Materiatzusammensetzungen des Kunststoff-Beschickungsgutes verarbeitet werden.

CH 503 563 A betrifft eine Schneckenpresse zur Verarbeitung von pulverförmigen, griesförmigen oder ähnlichen thermoplastischen Werkstoffen, insbesondere von solchen mit flüssigkeitsähnlichem Fließverhalten sowie von flüssigen Schmelzen. Durch das Vorhandensein stillstehender Stauwände im Innern der Wendel soll ein Mitdrehen oder Ausweichen der zu fördernden Masse im Innern des Einfüllschachtes vermieden werden. Durch einen zusätzlichen Verdrängerkörper soll der Weg, den die Pulver- oder Flüssigkeitsteilchen in radialer Richtung zurücklegen können, beliebig verkürzt und auf den günstigsten Wert eingestellt werden.

DE 12 719 73 A bezieht sich auf eine kontinuierlich arbeitende Schneckenpresse für thermoplastische Kunststoffe von extrem geringem Schüttgewicht, insbesondere für Abfallprodukte. Die Schneckenpresse besteht u.a. aus einer umlaufenden, horizontalen Schnecke mit unterschiedlicher, an dem Einfüllende stark konisch vergrößerter und in der Förderrichtung abnehmender Steghöhe. Im Bereich der Einzugszone ist die die Schnecke umgebende Gehäuseinnenwand mit einer Längsriffelung versehen. Der Schneckensteg ist längs des Randes seiner treibenden Flanke mit einer Unterschneidung und/oder Ausnehmungen versehen. Die Innenwandung der Zuführöffnung ist mit einer sägezahnartig ausgebildeten Schneidkante versehen, die zusammen mit dem umlaufenden Schneckensteg eine Einrichtung zum Zerkleinern des zugeführten Gutes bildet.

DE 10 2013 002 559 A1 offenbart eine Einschnecken-Piastifiziermaschine, insbesondere eine Kunststoffspritzgussmaschine, zum Fördern, Aufschmelzen und Homogenisieren eines Ausgangsmaterials von Kunststoff-Polymeren. Der Schneckendurchmesser D beträgt mindestens 150 mm und die wirksame Länge L weist zum Schneckendurchmesser D ein Verhältnis LID von 1 bis 8 auf. Die Schnecke ist horizontal angeordnet, wobei der Einfüllschacht in einem Winkel von 90° zu der Schnecke angeordnet ist.

### Darstellung der Erfindung

Aufgabe der Erfindung ist es, das Längen- Durchmesserverhältnis eines Schneckenextruders drastisch zu reduzieren. Gleichzeitig soll trotzdem eine hohe Kompression des granulatförmigen Materials erfolgen, um einen dichten und kontinuierlichen Materialstrang zu extrudieren. Derartige Schneckenextruder könnten aufgrund ihrer geringeren Masse und Baugröße für bewegliche Anwendungen unter anderem in einem additiven Fertigungsprozess zum Einsatz kommen.

Die Aufgabe der Erfindung wird durch ein Verfahren zur Extrusion von thermo-mechanisch verformbarem granulatförmigen Material für einen additiven Fertigungsprozess gemäß Anspruch 1 gelöst.

Eine Vorrichtung zur Extrusion von thermo-mechanisch verformbaren granulatförmigen Materialien umfasst einen vertikal angeordneten Schneckenextruder kompakter Bauform mit einem Längen-Durchmesserverhältnisvon 1 - 10, bevorzugt von 1 - 3, eine Befülleinrichtung und eine Extruderschnecke, welche mit einem Einfülltrichter in Verbindung steht. Weiterhin ist ein radial im Einzugsbereich des Schneckenextruders feststehendes oder beweglich angeordnetes Mittel umfasst, welches den Einzugsbereich im Einfülltrichter verkleinert. Das Mittel ein Zerkleinerungswerkzeug in Form eines Teilkreisschnitts eines Konus ist und der Befülleinrichtung gegenüberliegend radial angeordnet ist, wodurch die Extruderschnecke ein Außenradius- Kernradiusverhältnis aufweist, das einem 1 bis 1,5 fachen Durchmesser des granulatförmigen Materials entspricht. Das Zerkleinerungswerkzeug steht mit einer Trichterinnenwand des Einfülltrichters in Verbindung.

Das Mittel kann als ein Zerkleinerungswerkzeug in Form einer vertikal verlaufenden Wand einer Befülleinrichtung ausgebildet sein.

Das Mittel können Zerkleinerungswerkzeuge in Form von vertikal verlaufenden Rippen oder Klingen sein, die einer Befülleinrichtung gegenüberliegen.

Das Zerkleinerungswerkzeug und die Extruderschnecke können vorteilhafterweise eine Härte größer oder gleich der Härte des zu verarbeitenden Materials.

Das erfindungsgemäße Verfahren zur Extrusion von thermo-mechanisch verformbarem granulatförmigen Material für einen additiven Fertigungsprozess nutzt eine Vorrichtung, die in dem additiven Fertigungsprozess zum Einsatz kommt und einen vertikal angeordneten Schneckenextruder kompakter Bauform mit einem Längen-Durchmesserverhältnis von 1 - 10 umfasst.. Der Schneckenextruder umfasst eine Extruderschnecke, eine Befülleinrichtung und einen Einfülltrichter und die Befülleinrichtung weist ein der Extruderschnecke zugewandtes Ende auf, an dem die Befülleinrichtung mit dem Einfülltrichter verbunden ist, sodass das granulatförmige Material von der Befülleinrichtung in den Einfülltrichter befördert wird. In dem Einfülltrichter und in einem Einzugsbereich der Extruderschnecke ist radial ein Zerkleinerungswerkzeug angeordnet, das den Einzugsbereich für die Extruderschnecke im Einfülltrichter verkleinert, das eine Bewegung des granulatförmigen Materials in Umfangsrichtung blockiert und an dem durch Drehung der Extruderschnecke das granulatförmige Material zertrümmert wird. Das Zerkleinerungswerkzeug ist in Form eines Teilkreisschnitts eines Konus, in Form einer vertikal verlaufenden Wand, in Form von vertikal verlaufenden Rippen oder Klingen, oder in Form einer zu der Extruderschnecke gegenläufig drehbaren Spiralschnecke an einer Innenwand des Einfülltrichters ausgebildet. Das Zerkleinerungswerkzeug zerkleinert das über die Befülleinrichtung zugeführte granulatförmige Material zu einem vorwiegend staubförmigen Material, sodass der nachrutschende Staub Zwischenräume im granulatförmigen Material füllt, verdichtet und homogenisiert, und in einer nachfolgenden verkürzten Kompressionszone der Vorrichtung das verdichtete und homogenisierte Material aufgeschmolzen wird und aus einer verkürzten Ausstoßzone den Schneckenextruder zur weiteren Verwendung in dem additiven Fertigungsprozess verlässt.

Der Vorteil in der somit erreichbaren kleineren Baugröße von Extruderschnecken liegt in der Ausführung von kompakten beweglichen Schneckenextrudern zum Beispiel für die additive Fertigung. Durch die Reduzierung der Masse des Extruders können noch höhere Bauraten erreicht werden als mit denen im Stand der Technik beschriebenen Lösungen. Trotz der Reduzierung der Baugröße des Extruders kann dabei trotzdem relativ grobes Standard-Granulat aus dem Bereich des Spritzgusses verwendet werden.

### Ausführung der Erfindung

Die Erfindung wird anhand von Ausführungsbeispielen näher erläutert. Hierzu zeigen
- Figur 1: ein erstes Ausführungsbeispiel für die erfindungsgemäße Lösung im Einzugsbereich eines vertikalen Schneckenextruders,
- Figur 2: eine Ansicht der Figur 1 in einer Draufsicht,
- Figur 3: eine Detailansicht der Figur 1,
- Figur 4: eine weitere Detailansicht der Figur 1,
- Figur 5: eine weitere Detailansicht der Figur 1 mit einem granulatförmigen Material,
- Figur 6: ein weiteres Ausführungsbeispiel in der Draufsicht,
- Figur 7: ein weiteres Ausführungsbeispiel mit einem gegenläufigen Gewinde an der Innenwand des Einfülltrichters.

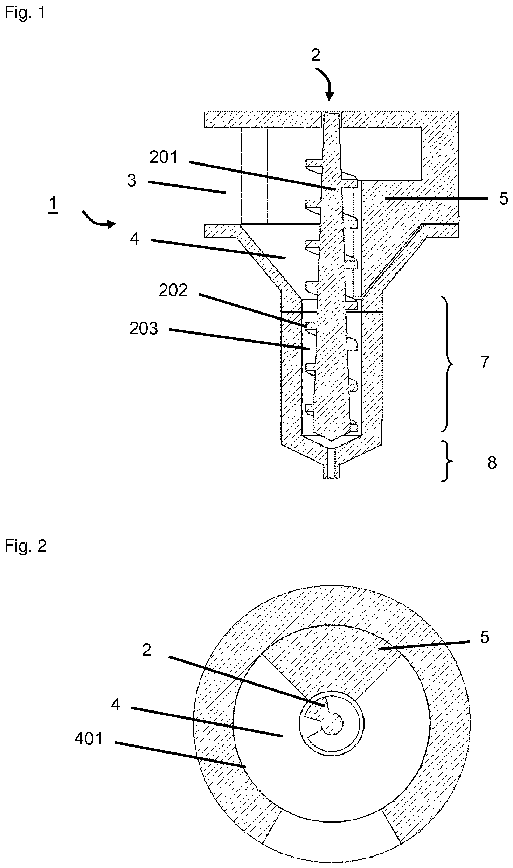

In Figur 1 wird die Vorrichtung in einem ersten Ausführungsbeispiel gezeigt. Dabei ist der vertikale Extruder 1 mit seiner Extruderschnecke 2 zu sehen. Der Extruder 1 ist mit einer Befülleinrichtung 3 verbunden. Die Befülleinrichtung 3 ist an ihrem, der Extruderschnecke 2 zugewandten Ende mit einem Einfülltrichter 4 verbunden, welcher direkt an der Extruderschnecke 2 und koaxial zu dieser anliegt, wobei das als Granulat vorliegende Material 6 von der Befülleinrichtung 3 in den Einfülltrichter 4 befördert wird. Eine geringe Bauhöhe und eine Reduzierung des Längen-Durchmesserverhältnises des Schneckenextruders werden durch ein Zerkleinerungswerkzeug realisiert. Das Zerkleinerungswerkzeug ist radial im Einzugsbereich des Schneckenextruders, bevorzugt im Einfülltrichter 4, feststehend oder beweglich angeordnet.

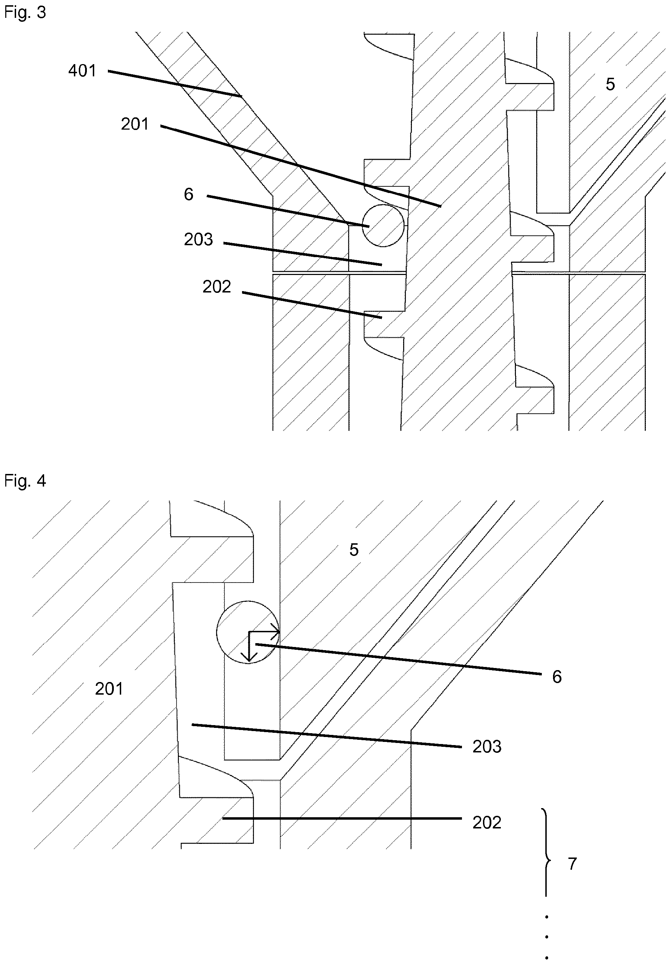

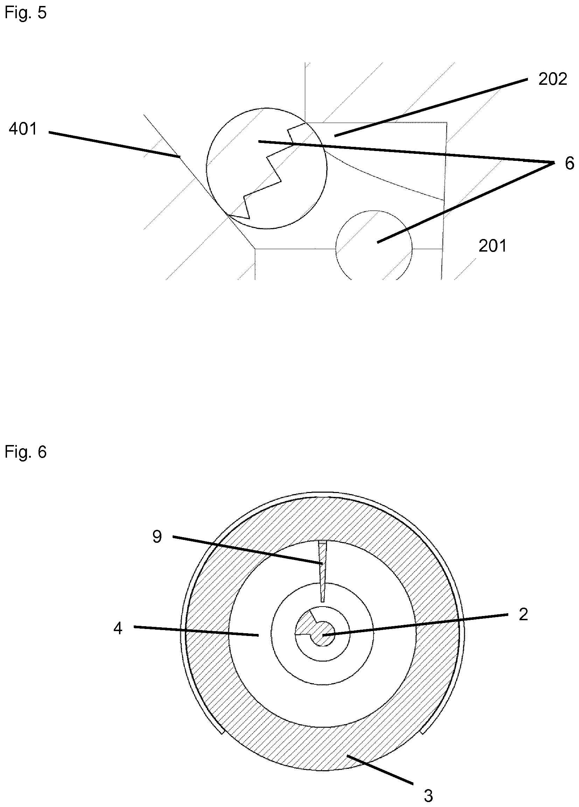

Die in Figuren 1 bis 4 gezeigte Lösung umfasst als Zerkleinerungswerkzeug einen Teilkreisschnitt eines Konus 5, welcher der Befülleinrichtung 3 gegenüberliegend radial angeordnet ist und mit dem Einfülltrichter 4 lösbar verbunden ist. Durch den Konus 5 wird der Einfüllbereich im Einfülltrichter 4 an dieser Stelle soweit verringert, dass die Extruderschnecke 2 ein Außenradius- Kernradiusverhältnis aufweist, das nur dem 1- bis 1,5-fachen des Durchmessers des zu fördernden granulatförmigen Materials 6 entspricht (Fig.3). Das einfallende granulatförmige Material 6 fällt in den Einfülltrichter 4 und wird von der Extruderschnecke 2 weiter befördert. Durch die radiale Anordnung des Konus 5 in dem Einfülltrichter 4 wird zum einen verhindert, dass sich das zugeführte Material 6 am Rand der Extruderschnecke 2 nur in Umfangsrichtung, also nur mit der Drehung der Extruderschnecke 2, bewegt und nicht nach unten gefördert wird. Sobald am Rand der Extruderschnecke 2 befindliche Körner des granulatförmigen Materials 6 auf den Konus 5 treffen wird durch die Blockierung der Bewegung in Umfangsrichtung eine Bewegung in axialer Richtung hervorgerufen (Fig.4). Durch den gleichzeitig sehr kleinen Zwischenraum zwischen Schneckenwelle 201 und Schneckenblatt 202 kann das Material 6 nicht im Ganzen weiter gefördert werden und wird zertrümmert (Fig.5). Die Schneckenwelle 201 und der Konus 5 müssen aus einem geeigneten Material in Bezug auf das zu verarbeitende Material 6 gefertigt sein. Die Härte der Schneckenwelle 201 und des Konus 5 sollte größer oder gleich der Härte des zu verarbeitenden Materials 6 sein. Das Zertrümmern des Materials 6 hat eine Anhäufung von feinem Staub im Einfülltrichter 4 zur Folge. Dieser nachrutschende Staub füllt den Raum, der sich aufgrund der Schüttdichte des groben Materials 6 im Schneckengang 203 ergibt. Auf diese Weise erfolgt bereits im Einzug, ohne thermische Einwirkung eine Verdichtung und Homogenisierung des zu fördernden Materials 6. Da auch weniger Luft in dem Extruder 1 nach unten gefördert wird, kann das Material 6 in der nachfolgenden Kompressionszone 7 schneller aufgeschmolzen werden. Die Kompressionszone 7 und die Ausstoßzone 8 werden deutlich verkürzt, so dass der Extruder 1 deutlich kompakter wird und ein Längen- Durchmesserverhältnis von 3- 10 bis 1 - 3 erreicht werden kann.

Figur 6 zeigt ein weiteres AusführungsbeispieL Alle gleichen Teile in Figur 6 werden mit den gleichen Bezugszeichen wie in den Figuren 1 bis 5 benannt. Der grundsätzliche Aufbau wird unter Figur 1 beschrieben, worauf Bezug genommen wird.

Die in Figur 6 gezeigte Lösung umfasst als Zerkleinerungswerkzeug eine vertikal verlaufende Wand 9, welche ähnlich dem Konus 5 der Befülleinrichtung 3 gegenüberliegend radial angeordnet ist. Die vertikal verlaufende Wand 9 funktioniert in ähnlicher Weise wie der Konus 5 und muss aus diesem Grund nicht weiter ausgeführt werden. Ebenso können auch an der Trichterwand des Einfülltrichters 4 Rippen oder Klingen lösbar, unbeweglich angeordnet sein, die in gleicher Weise auf das granulatförmige Material 6 einwirken, wie der Konus 5 oder die vertikal verlaufende Wand 9.

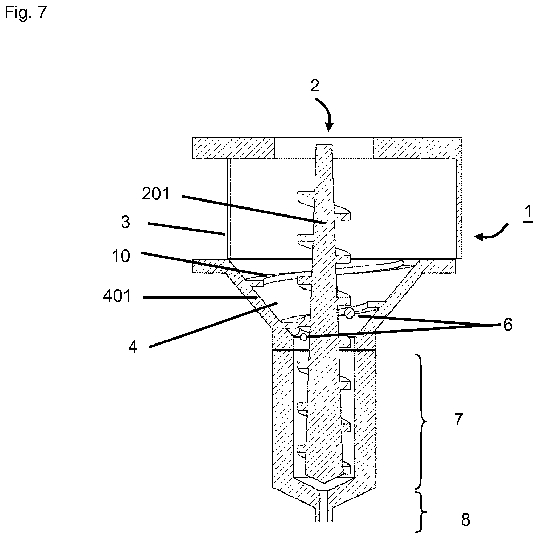

Figur 7 zeigt ein weiteres Ausführungsbeispiel, in welchem eine gegenläufige Spiralschnecke 10 an der Innenwand 401 des Einfülltrichters 4 angeordnet ist. Durch die gegenläufige Drehung der Spiralschnecke 10 zur Schneckenwelle 201 wird das granulatförmige Material 6 in die Extruderschnecke 2 transportiert, verdichtet und zu große Bestandteile des Materials 6 zerkleinert, wodurch eine weitere Verdichtung des Materials erfolgen kann.

Die Zerkleinerungswerkzeuge können sowohl als stilistehendes als auch als rotierendes Element ausgeführt sein.

Die Vorrichtung funktioniert über einen großen Drehzahlbereich der Extruderschnecke 2. Dadurch kann Sie auch bei Materialien 6 die eine langsame Schneckendrehzahl erfordern eingesetzt werden.

Ebenfalls vom Material 6 abhängig ist die Temperatur im Einzugsbereich. Spröde Materialien 6 wie Kompositmaterialien benötigen eine Zerkleinerung in einem festen Zustand. Zähe Materialien 6 wie reine thermoplastische Kunststoffe benötigen eine Temperatur im Bereich Ihrer jeweiligen Glasübergangstemperatur.

Im Falle einer beweglichen Zerkleinerungsvorrichtung kann die Zerkleinerung an einer festen Komponente des Einzugsbereichs erfolgen und muss nicht in Form einer Relativbewegung zu Schnecke erfolgen.

### Bezugszeichen

- 1: Extruder
- 2: Extruderschnecke
201 Schneckenwelle
202 Schneckenblatt
203 Schneckengang

- 3: Befülleinrichtung
- 4: Einfülltrichter
401 Innenwand des Einfülltrichters 4

- 5: Konus
- 6: als Granulat vorliegendes Material
- 7: Kompressionszone
- 8: Ausstoßzone
- 9: vertikal verlaufende Wand
- 10: gegenläufige Spiralschnecke

## Patentansprüche

1. Verfahren zur Extrusion von thermo-mechanisch verformbarem granulatförmigen Material (6) für einen additiven Fertigungsprozess unter Nutzung einer Vorrichtung, die in dem additiven Fertigungsprozess zum Einsatz kommt und einen vertikal angeordneten Schneckenextruder (1) kompakter Bauform mit einem Längen-Durchmesserverhältnis von 1 - 10 umfasst,
wobei der Schneckenextruder (1) eine Extruderschnecke (2), eine Befülleinrichtung (3) und einen Einfülltrichter (4) umfasst und die Befülleinrichtung (3) ein der Extruderschnecke (2) zugewandtes Ende aufweist, an dem die Befülleinrichtung (3) mit dem Einfülltrichter (4) verbunden ist, sodass das granulatförmige Material (6) von der Befülleinrichtung (3) in den Einfülltrichter (4) befördert wird,
wobei in dem Einfülltrichter (4) und in einem Einzugsbereich der Extruderschnecke (2) radial ein Zerkleinerungswerkzeug (5, 9, 10) angeordnet ist, das den Einzugsbereich für die Extruderschnecke (2) im Einfülltrichter (4) verkleinert, das eine Bewegung des granulatförmigen Materials (6) in Umfangsrichtung blockiert und an dem durch Drehung der Extruderschnecke (2) das granulatförmige Material zertrümmert wird,
wobei das Zerkleinerungswerkzeug
- in Form eines Teilkreisschnitts eines Konus (5),
- in Form einer vertikal verlaufenden Wand (9),
- in Form von vertikal verlaufenden Rippen oder Klingen, oder
- in Form einer zu der Extruderschnecke (2) gegenläufig drehbaren Spiralschnecke (10) an einer Innenwand (401) des Einfülltrichters (4) ausgebildet ist, und
wobei das Zerkleinerungswerkzeug (5, 9, 10) das über die Befülleinrichtung (3) zugeführte granulatförmige Material (6) zu einem vorwiegend staubförmigen Material (6) zerkleinert, sodass der nachrutschende Staub Zwischenräume im granulatförmigen Material (6) füllt, verdichtet und homogenisiert, und in einer nachfolgenden verkürzten Kompressionszone (7) der Vorrichtung das verdichtete und homogenisierte Material (6) aufgeschmolzen wird und aus einer verkürzten Ausstoßzone (8) den Schneckenextruder zur weiteren Verwendung in dem additiven Fertigungsprozess verlässt.

2. Verfahren nach Anspruch 1, **dadurch gekennzeichnet, dass** das in Form eines Konus (5), einer vertikal verlaufenden Wand (9) oder vertikal verlaufenden Rippen oder Klingen ausgebildete Zerkleinerungswerkzeug dem Ende der Befülleinrichtung (3) gegenüberliegend angeordnet ist.

3. Verfahren nach Anspruch 1 oder 2, **dadurch gekennzeichnet, dass** durch das in Form eines Konus (5) ausgebildete Zerkleinerungswerkzeug der Einzugsbereich für die Extruderschnecke (2) im Einfülltrichter (4) derart verkleinert ist, dass ein Außenradius-Kernradiusverhältnis der Extruderschnecke (2) dem 1- bis 1,5-fachen eines Durchmessers des granulatförmigen Materials (6) entspricht.

## Claims

1. A method for extruding thermomechanical deformable granular material (6) for an additive production process by use of a device which is used in the additive production process and comprising a vertically arranged screw extruder (1) of compact structural type having length/diameter ratio of from 1 to 10,
wherein the screw extruder (1) comprising an extruder screw (2), a filling device (3) and a filling funnel (4), and the filling device (3) comprising an end facing the extruder screw (2) at which the filling device (3) is connected to the filling funnel (4), such that the granular material (6) is conveyed from the filling device (3) into the filling funnel (4),
wherein a comminution tool (5, 9, 10) is arranged radially in the filling funnel (4) and in a filling region of the extruder screw (2), which tool (5, 9, 10) reduces the filling region for the extruder screw (2) in the filling funnel (4), which tool (5, 9, 10) blocks a movement of the granular material (6) in the circumferential direction and on which tool (5, 9, 10) the granular material (6) is comminuted by rotating the extruder screw (2),
wherein the comminution tool is formed
- in the form of a pitch circle section of a cone (5),
- in the form of a vertically extending wall (9),
- in the form of vertically extending ribs or blades, or
- in the form of a helical screw (10) rotatable in the opposite direction to the extruder screw (2) on an inner wall of the filling funnel (4),
and wherein the comminution tool (5, 9, 10) comminutes the granular material (6) supplied via the filling device (3) in a mainly dust-like material (6), so that the settling dust fills, compacts and homogenizes intermediate spaces in the granular material (6), and in a subsequent shortened compression zone (7) of the device, the compacted and homogenized material (6) is molten and leaves the screw extruder from a shortened discharge zone (8) for subsequent use in the additive production process.

2. The method as claimed in claim 1, **characterized in that** the comminution tool, which is formed in the form of a cone (5), in the form of a vertically extending wall (9) or in the form of vertically extending ribs or blades, is arranged opposite the end of the filling device (3).

3. The method as claimed in claim 1, **characterized in that** the filling region for the extruder screw (2) in the filling funnel (4) is reduced by the comminution tool formed in the form of a cone (5) in such a way that an outer radius/core radius ratio corresponds to from 1 to 1.5 times a diameter of the granular material (6) .

## Revendications

1. Procédé pour l'extrusion d'un matériau granulaire (6) pouvant être déformé de manière thermo-mécanique pour un processus de fabrication additive au moyen d'un dispositif, qui est utilisé dans le processus de fabrication additive et comprend une extrudeuse à vis (1) disposée verticalement de forme de construction compacte avec un rapport longueur-diamètre de 1 - 10,
dans lequel l'extrudeuse à vis (1) comprend une vis extrudeuse (2), un dispositif de remplissage (3) et une trémie de versement (4) et le dispositif de remplissage (3) présente une extrémité tournée vers la vis extrudeuse (2), sur laquelle le dispositif de remplissage (3) est relié à la trémie de versement (4), de sorte que le matériau granulaire (6) est transporté à partir du dispositif de remplissage (3) dans la trémie de versement (4),
dans lequel un outil de broyage (5, 9, 10), qui réduit la zone d'introduction pour la vis extrudeuse (2) dans la trémie de versement (4), qui bloque un mouvement du matériau granulaire (6) dans la direction périphérique et sur lequel le matériau granulaire est fragmenté par rotation de la vis extrudeuse (2), est disposé radialement dans la trémie de versement (4) et dans une zone d'introduction de la vis extrudeuse (2),
dans lequel l'outil de broyage est réalisé
- sous forme d'une section circulaire partielle d'un cône (5),
- sous forme d'une paroi (9) s'étendant verticalement,
- sous forme de nervures ou lames s'étendant verticalement, ou
- sous forme d'une vis en spirale (10) tournant en sens inverse de la vis extrudeuse (2) sur une paroi intérieure (401) de la trémie de versement (4), et
dans lequel l'outil de broyage (5, 9, 10) broie le matériau granulaire (6) amené par l'intermédiaire du dispositif de remplissage (3) en un matériau (6) principalement sous forme de poussières, de sorte que la poussière effectuant un glissement remplit les espaces intermédiaires dans le matériau granulaire (6), se tasse et s'homogénéise, et dans une zone de compression (7) raccourcie suivante du dispositif le matériau (6) tassé et homogénéisé est fondu et à l'extérieur d'une zone d'éjection (8) raccourcie quitte la vis extrudeuse pour utilisation ultérieure dans le processus de fabrication additive.

2. Procédé selon la revendication 1, **caractérisé en ce que**
l'outil de broyage réalisé sous forme d'un cône (5), d'une paroi (9) s'étendant verticalement ou de nervures ou lames s'étendant verticalement est disposé à l'opposé de l'extrémité du dispositif de remplissage (3).

3. Procédé selon la revendication 1 ou 2, **caractérisé en ce que**
la zone d'introduction pour la vis extrudeuse (2) dans la trémie de versement (4) est réduite par l'outil de broyage réalisé sous forme d'un cône (5), de telle sorte qu'un rapport rayon extérieur-rayon de noyau de la vis extrudeuse (2) correspond à 1 à 1,5 fois un diamètre du matériau granulaire (6).
